# EUROPÄISCHE PATENTSCHRIFT

(11) **EP 1 741 173 B1**
(45) Veröffentlichungstag und Bekanntmachung des Hinweises auf die Patenterteilung: **30.12.2009**
(21) Anmeldenummer: 05747182.3
(22) Anmeldetag: 21.04.2005
(51) Int. Cl.: H02K 5/173, F16C 25/08

(54) **ELEKTRISCHE MASCHINE UND DEREN LAGER**
ELECTRICAL MACHINE AND ITS BEARINGS
MACHINE ELECTRIQUE ET SES PALIERS

(30) Priorität: 29.04.2004 DE 102004021138
(43) Veröffentlichungstag der Anmeldung: 10.01.2007
(73) Patentinhaber: SIEMENS AKTIENGESELLSCHAFT, 80333 München (DE)
(72) Erfinder: VERHOEVEN, Daniel, 90425 Nürnberg (DE)
(86) Internationale Anmeldenummer: PCT/EP2005/051785
(87) Internationale Veröffentlichungsnummer: WO 2005/107044

(56) Entgegenhaltungen:
- DE-A1- 4 224 980
- DE-U1- 9 015 876
- DE-U1- 29 603 579
- US-A- 4 204 442
- US-A- 4 892 423
- US-A- 5 316 393

## Beschreibung

Die vorliegende Erfindung betrifft eine elektrische Maschine mit einem Gehäuse, einer ersten Lagereinrichtung, die als Loslager ausgestaltet ist, einer zweiten Lagereinrichtung, die als Festlager ausgestaltet ist, und einer Welle, die mit den beiden Lagereinrichtungen in dem Gehäuse drehbar gelagert ist.

Die radiale Nachgiebigkeit von Wälzlagern hat einen wesentlichen Einfluss auf das Betriebsverhalten von Maschinen, da durch die zusätzliche Elastizität der Lager die biegekritischen Drehzahlen der Rotoren gegenüber der idealen starren Lagerung absinken. Wälzlager weisen zudem i.a. in der horizontalen Querrichtung eine geringere Steifigkeit auf als in der vertikalen Querrichtung, da dort die radiale Vorspannung durch das Rotorgewicht nicht vorhanden ist. Dies führt zu einer Aufspaltung der Biegeeigenformen in eine horizontale und eine vertikale, wobei die horizontale in der Frequenz niedriger liegt und daher schon bei niedrigeren Drehzahlen mit Schwingungs- und Geräuschproblemen zu rechnen ist.

In der Praxis wird dieses Problem in bekannter Weise gelöst, indem Wälzlager eingesetzt werden, die sich axial vorspannen lassen, z.B. Rillenkugellager oder Schrägkugellager. So erhöht sich vor allem die horizontale Quersteifigkeit der Lager und damit auch der mögliche Drehzahlbereich der Maschine. Außerdem wird das Geräuschverhalten und die Lebensdauer der Lager positiv beeinflusst.

In DE 196 54 089 A1 ist ein Rillenkugellager beschrieben, bei dem eine axiale Vorspannung innerhalb des Lagers erzielt wird, indem durch Konstruktionselemente des Käfigs die Wälzkörper abwechselnd axial in die eine und die entgegengesetzte Endlage der Laufflächen gedrückt werden. Es handelt sich demnach nicht um ein standardmäßig verfügbares Lager. Auch DE 689 04 444 T2 und DE 36 26 626 C2 beschreiben Spezialkonstruktionen von Wälzlagern mit axialer Vorspannmöglichkeit. Diese Varianten haben ebenfalls den Nachteil, dass die Lösungen Standardbauteile ausschließen.

In DE 42 24 980 A1 wird eine konstruktive Lösung beschrieben, die Standard-Wälzlager verwendet und die Lager in einer Richtung so stark vorspannt, dass äußere Belastungen zwar eine Schwankung des Wertes der axialen Vorspannung, aber nicht eine Richtungsumkehr bewirken können. Dieser Weg löst das Problem prinzipiell, aber es werden schon innerhalb der Maschine hohe statische Belastungen der Lager erzeugt, die die Lebensdauer reduzieren.

Die DE 30 38 112 A1 beschreibt eine Konstruktion mit ein- und nachstellbarer axialer Vorspannung der Lager. Auch hier sind einige Sonderelemente erforderlich und der Innenring eines Lagers muss verschiebbar auf der Welle ausgeführt sein. Da der Innenring in vielen Fällen Umfangslast hat, besteht bei dieser Variante die Gefahr des Passungsrostes.

Aus der Patentschrift US 4,892,423 A ist ein rotatorischer Antrieb mit einer Welle bekannt, auf die ein Festlager und ein Loslager aufgebracht ist. Das Festlager besteht aus zwei Rillenkugellagern, deren Außenlager oder Innenlager durch Federscheiben voneinander gedrückt werden.

Weiterhin offenbart die Patentschrift US 5,316,393 ein Festlager mit zwei Rillenkugellagern, deren Außenlager jeweils durch Schraubenfedern aufeinanderzu vorgespannt sind. Unabhängig davon, in welche Richtung sich die Welle samt Innenring axial bewegt, bleibt eines der Rillenkugellager immer vorgespannt und weist eine entsprechend hohe Steifigkeit auf.

Des Weiteren ist in der Druckschrift DE 90 15 876 U1 eine Wälzlagerung einer Rotorwelle eines Schraubenverdichters beschrieben. Insbesondere ist die Wälzlagerung einer zweiseitig gelagerten Welle eines Rotors beschrieben. Die zweiseitige Lagerung besteht aus einem Loslager und einem Führungslager. Das Führungslager weist ein Radiallager in Form eines Zylinderrollenlagers und ein Axiallager in Form eines Rillenkugellagers auf.

Bei der allgemein bekannten schwimmenden Lagerung sind beide Lager vorgespannt, der Rotor ist allerdings nicht statisch bestimmt gelagert, d.h. er hat einen translatorischen Freiheitsgrad in Achsrichtung.

Die Aufgabe der vorliegenden Erfindung besteht darin, bei einer elektrischen Maschine eine Lagerung vorzuschlagen, bei der die biegekritischen Drehzahlen möglichst hoch sind und Standardbauteile verwendet werden können.

Erfindungsgemäß wird diese Aufgabe gelöst, durch eine elektrische Maschine mit einem Gehäuse, einer ersten Lagereinrichtung, die als Loslager ausgestaltet ist, einer zweiten Lagereinrichtung, die als Festlager ausgestaltet ist, und einer Welle, die mit den beiden Lagereinrichtungen in dem Gehäuse drehbar gelagert ist, wobei die zweite Lagereinrichtung zwei Rillenkugellager aufweist, die zueinander jeweils mit einer Federeinrichtung vorgespannt sind. Mindestens einer der Außenringe der Rillenkugellager ist ferner mit einer Übergangspassung in das Gehäuse eingefügt. Dadurch wird erreicht, dass der Außenring zwar axial verschiebbar ist, aber die Lagerung in radialer Richtung dennoch bestimmt ist.

Darüber hinaus ist einer der Außenringe der Rillenkugellager in dem Gehäuse radial freigedreht. Dies hat den Vorteil einer eindeutigen Lastaufteilung zwischen den beiden Rillenkugellagern.

In vorteilhafter Weise kann somit eine Wälzlagerung des Rotors einer elektrischen Maschine bereitgestellt werden, die mit einfachen Rillenkugellagern und Federelementen den Rotor axial führt und die alle Lager der elektrischen Maschine mit einer axialen Mindestvorspannung beaufschlagt, welche nicht durch äußere Axialkräfte auf den Rotor aufgehoben werden kann.

Auf der Welle zwischen den beiden Lagereinrichtungen können Rotorwicklungen angeordnet sein. Mit der erfindungsgemäßen Festlagerkonstruktion ist es damit möglich, die hohe Radialsteifigkeit der Rillenkugellager permanent zu erhalten und dadurch eine höhere Maximaldrehzahl zu erreichen.

Vorzugsweise sind die beiden Innenringe der Rillenkugellager durch ein Distanzstück axial voneinander beabstandet. Dadurch können die Außenringe der beiden Rillenkugellager unabhängig voneinander durch die Federeinrichtungen in axialer Richtung verschoben werden, so dass stets eine axiale Vorspannung gewährleistet ist.

Ein Sicherungselement kann die Rillenkugellager auf der Welle axial sichern. Damit ist zusätzlich zu der Reibkraft, die beispielsweise von dem Aufschrumpfen der Lagerinnenringe auf die Welle resultiert, gewährleistet, dass Axialkräfte über das Lager auf das Gehäuse übertragen werden können.

In einer bevorzugten Ausführungsform wirken die Federeinrichtungen jeweils auf die Außenringe der Rillenkugellager. Prinzipiell könnten die Federeinrichtungen zwar auch auf die Innenringe wirken, wobei die Außenringe dann fest in das Gehäuse eingepasst werden müssten. Dies hätte jedoch bei der Montage Nachteile.

Bevorzugt ist weiterhin, wenn die Federeinrichtungen jeweils eine Schraubenfeder aufweisen, mit der sie die Vorspannkraft aufbringen. Derartige Schraubenfedern sind einfach in der Herstellung und kostengünstig. Grundsätzlich könnten aber auch hydraulische, pneumatische, elektrische, magnetische und andere Federelemente verwendet werden.

Die vorliegende Erfindung wird nun anhand der beigefügten Zeichnungen näher erläutert, in denen zeigen:
- FIG 1: eine elektrische Maschine mit konventioneller Lagerung;
- FIG 2: eine elektrische Maschine mit erfindungsgemäßer Lagerung in einem prinzipiellen Diagramm; und
- FIG 3: ein konkretes Ausführungsbeispiel einer elektrischen Maschine mit erfindungsgemäßer Lagerung.

Das nachfolgend näher geschilderte Ausführungsbeispiel stellt eine bevorzugte Ausführungsform der vorliegenden Erfindung dar.

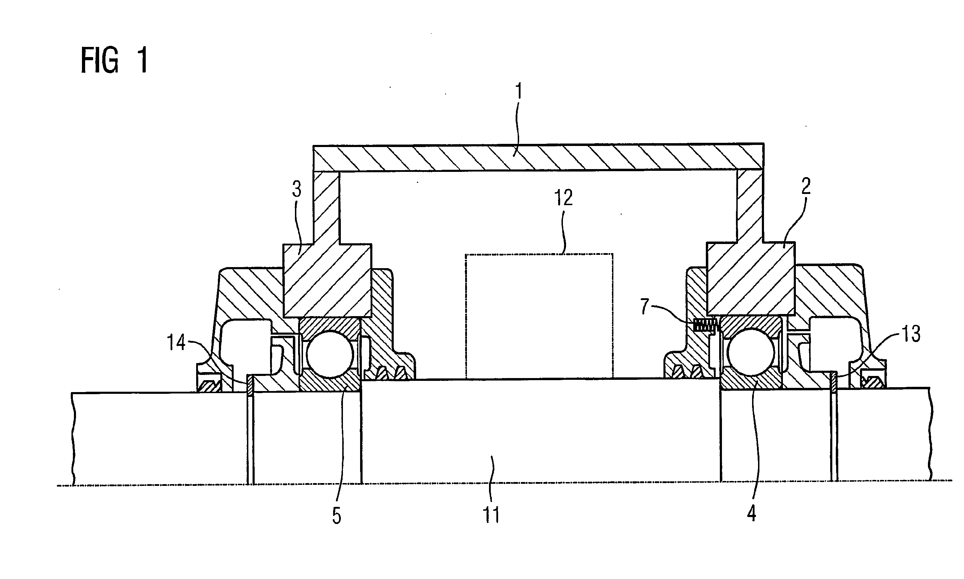

Die Erfindung baut auf eine bekannte und verbreitete Wälzlagerung (FIG 1) auf. Diese Lagerung ist in einer beliebigen Gehäusekonstruktion 1, 2, 3 eingebaut. Es wird ein Rillenkugellager 5 mit fester Passung am Innen- und Außenring als Festlager eingesetzt. Das Loslager wird durch ein Rillenkugellager 4 gestaltet, das am Außenring eine lose Passung besitzt. Der Außenring kann durch eine Druckfeder 7 verschoben werden. Beide Innenringe der Lager sind durch Sicherungselemente 13, 14 axial auf der Welle 11 gesichert. Die axiale Anstellkraft von der Feder 7 überträgt sich über den Rotor 11, 12 auf das Festlager 5. Sie kann allerdings durch eine äußere Axialkraft (z.B. Zugkraft auf die Welle 11) kompensiert werden, so dass das Festlager 5 axialkraftfrei läuft.

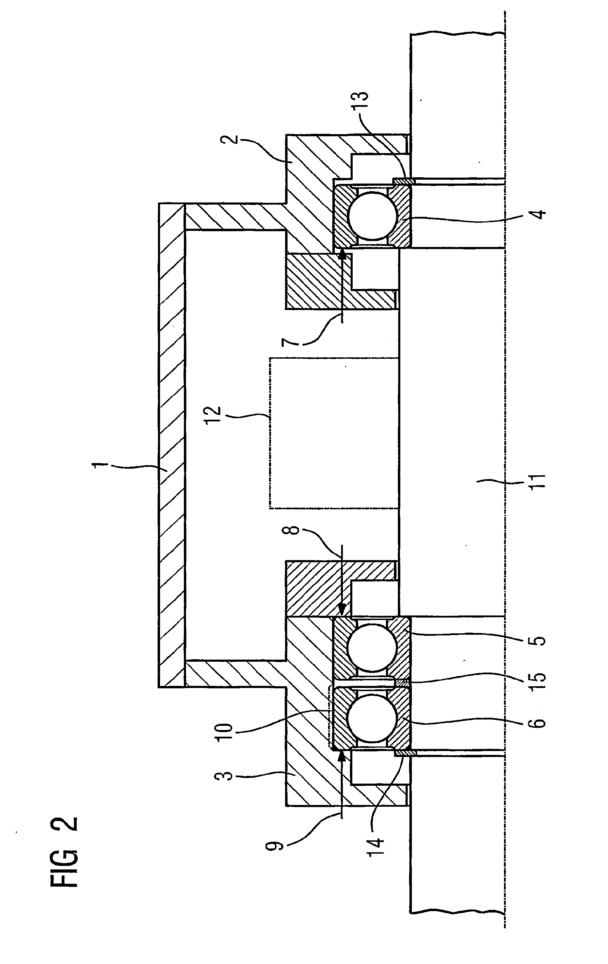

Die Erfindung verwendet entsprechend der Prinzipdarstellung von FIG 2 das gleiche Loslagerprinzip. Als Festlager werden statt einem zwei Rillenkugellager 5,6 eingesetzt, deren Innenringe fest auf der Welle 11 sitzen und die durch ein Distanzelement 15 axial distanziert sind. Ein Sicherungselement 14 sichert die Innenringe auf der Welle axial. Die Außenringe beider Lager sind mit loser Passung in das umgebende Gehäuseteil 3 eingefügt. Durch die lose Passung, die auch als Übergangspassung bezeichnet wird, kann erreicht werden, dass die Außenringe gegenüber dem Gehäuseteil 3 axial verschiebbar sind. Gleichzeitig gewährleistet die Übergangspassung eine ausreichende Radialsteifigkeit. Einer der beiden Außenringe kann aber auch radial freigedreht eingebaut sein, wodurch das entsprechende Lager aus Gründen der eindeutigen Lastaufteilung nur Axiallasten aufnehmen kann.

Die beiden Lager 5, 6 des Festlagers sind durch das umgebende Gehäuse 3 axial fixiert und die Außenringe werden mit Federelementen 8, 9 derart angestellt, dass die Federkräfte in Richtung des durch das Distanzelement 15 erzeugten Spaltes zeigen. Die Richtung der Anstellkraft der Feder 7 des Loslagers 4 kann beliebig gewählt sein.

Bei der vorliegenden Gestaltung der Lagerung hat die axiale Anstellkraft des Loslagers 4 unabhängig von einer äußeren Axialkraft den Wert der Kraft der Feder 7 reduziert um die Reibkraft des Außenringes in der Gehäusebohrung 2. Die Axialkraft, die das Festlager 5, 6 insgesamt aufnehmen muss, berechnet sich aus der vektoriellen Addition der auf die Welle 11 wirkenden, äußeren Kraft, der Kraft der Feder 7 des Loslagers 4 und der Reibkraft. Je nach Betrag und Richtung dieser Gesamtkraft ist beim Festlager ein Lager 5 oder 6 nur mit der Kraft der jeweiligen Feder 8 bzw. 9 reduziert um die zugehörige Reibkraft axial beaufschlagt und das andere Lager mit der Gesamtkraft. Diese Gesamtkraft wirkt im Lager und wird am Außenring anteilig durch Kontaktkraft im Gehäuse aufgenommen. In jedem Fall hat die axiale Vorspannung eines der beiden Lager mindestens den Wert der zugehörigen Federanstellkraft reduziert um die Reibkraft. Da nun eines der beiden Lager 5 oder 6 unabhängig von der Axialkraft auf die Welle 11 immer vorgespannt ist, wird stets die geforderte Radialsteifigkeit des Festlagers aufrechterhalten. Dadurch kann vermieden werden, dass durch einen axialkraftfreien Zustand des Gesamtlagers oder eines der beiden Rillenlager 5 oder 6 die entsprechenden Radialsteifigkeiten absinken und die Maschine zu höheren Schwingungen und Geräuschwerten neigt.

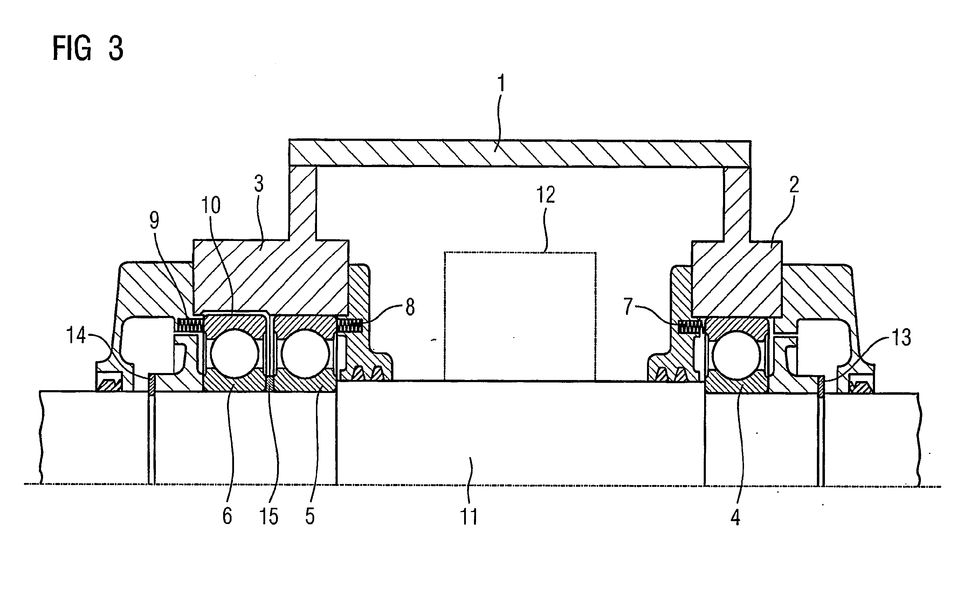

In FIG 3 ist eine auf der Prinzipdarstellung von FIG 2 basierende konkrete Ausführungsform einer erfindungsgemäßen elektrischen Maschine wiedergegeben. Die Federelemente 7, 8 und 9 sind hier konkret als Schraubenfedern ausgeführt. Diese Realisierung eines Federelements ist gegenüber anderen Realisierungsformen verhältnismäßig kostengünstig und robust.

Erfindungsgemäß wird so mit einfachen Standardbauteilen ohne Verzicht auf die axiale Führung des Rotors durch axiale Bewegungsmöglichkeit aller Außenringe der Lagerung in mindestens einer Richtung und das Einwirken von Federkräften auf alle Außenringe erreicht, dass unter beliebiger äußerer Axialkraft kein Lager axialkraftfrei laufen kann.

Die Vorteile des erfindungsgemäßen Lageraufbaus sind:
1. Erhöhte Radialsteifigkeit durch Vorspannung der Lager und damit höhere maximale Betriebsdrehzahl;
2. Reduzierung des Lagergeräusches;
3. keine Gefahr von vorzeitigen Lagerschäden aufgrund von Unterlastbetrieb;
4. keine Sonderbauteile erforderlich.

## Patentansprüche

1. Elektrische Maschine mit
- einem Gehäuse (1),
- einer ersten Lagereinrichtung (4), die als Loslager ausgestaltet ist,
- einer zweiten Lagereinrichtung (5,6), die als Festlager ausgestaltet ist, und
- einer Welle (11), die mit den beiden Lagereinrichtungen in dem Gehäuse (1) drehbar gelagert ist,
**dadurch gekennzeichnet, dass**
- die zweite Lagereinrichtung (5,6) zwei Rillenkugellager aufweist, die zueinander jeweils mit einer Federeinrichtung (8,9) vorgespannt sind,
- einer der Außenringe der Rillenkugellager mit einer Übergangspassung in das Gehäuse (1) eingefügt ist-, und
- der andere Außenring der Rillenkugellager in dem Gehäuse (1) radial freigedreht ist.

2. Elektrische Maschine nach Anspruch 1, wobei auf der Welle (11) zwischen den beiden Lagereinrichtungen (4,5,6) Rotorwicklungen (12) angeordnet sind.

3. Elektrische Maschine nach Anspruch 1 oder 2, wobei die beiden Rillenkugellager durch ein Distanzstück (15) axial voneinander beabstandet sind.

4. Elektrische Maschine nach einem der vorhergehenden Ansprüche, wobei ein Sicherungselement (14) die Rillenkugellager auf der Welle (11) axial sichert.

5. Elektrische Maschine nach einem der vorhergehenden Ansprüche, wobei die Federeinrichtungen (8,9) jeweils auf die Außenringe der Rillenkugellager wirken.

6. Elektrische Maschine nach einem der vorhergehenden Ansprüche, wobei die Federeinrichtungen (8,9) jeweils eine Schraubenfeder aufweisen.

## Claims

1. Electrical machine having
- a housing (1),
- a first bearing device (4), which is in the form of a movable bearing,
- a second bearing device (5, 6), which is in the form of a fixed bearing, and
- a shaft (11), which is mounted with the two bearing devices in the housing (1) such that it can rotate,
**characterized in that**
- the second bearing device (5, 6) has two deep groove ball bearings, which are prestressed with respect to one another in each case by a spring device (8, 9),
- one of the outer rings of the deep groove ball bearings is inserted into the housing (1) with a transition fit, and
- the other outer ring of the deep groove ball bearings is rotated freely and radially in the housing (1).

2. Electrical machine according to Claim 1, rotor windings (12) being arranged on the shaft (11) between the two bearing devices (4, 5, 6).

3. Electrical machine according to Claim 1 or 2, the two deep groove ball bearings being spaced axially apart from one another by a spacer (15).

4. Electrical machine according to one of the preceding claims, a securing element (14) securing the deep groove ball bearings axially on the shaft (11).

5. Electrical machine according to one of the preceding claims, the spring devices (8, 9) each acting on the outer rings of the deep groove ball bearings.

6. Electrical machine according to one of the preceding claims, the spring devices (8, 9) each having a helical spring.

## Revendications

1. Machine électrique comprenant
- un carter ( 1 ),
- un premier dispositif ( 4 ) de palier, qui est conformé en palier libre,
- une deuxième dispositif ( 5, 6 ) de palier, qui est conformé en palier fixe, et
- un arbre ( 11 ), qui est monté tournant avec les deux dispositifs de palier dans le carter ( 1 ),
**caractérisée en ce que**
- le deuxième dispositif ( 5, 6 ) de palier a deux roulements rainurés à billes, qui sont précontraints l'un par rapport à l'autre respectivement par un dispositif ( 8, 9 ) à ressort,
- l'une des bagues extérieures des roulements rainurés à billes est insérée par un ajustement de transition dans le carter ( 1 ), et
- l'autre bague extérieure du roulement rainuré à billes est montée à rotation libre radialement dans le carter ( 1 ).

2. Machine électrique suivant la revendication 1, dans laquelle des enroulements ( 12 ) de rotor sont montés sur l'arbre ( 11 ) entre les deux dispositifs ( 4, 5, 6 ) de palier.

3. Machine électrique suivant la revendication 1 ou 2, dans laquelle les deux roulements rainurés à billes sont maintenus à distance axialement l'un de l'autre par une pièce ( 15 ) d'entretoisement.

4. Machine électrique suivant l'une des revendications précédentes, dans laquelle un élément ( 14 ) d'arrêt arrête axialement les roulements rainurés à billes sur l'arbre ( 11 ).

5. Machine électrique suivant l'une des revendications précédentes, dans laquelle les dispositifs ( 8, 9 ) à ressort agissent respectivement sur les bagues extérieures des roulements rainurés à billes

6. Machine électrique suivant l'une des revendications précédentes, dans laquelle les dispositifs ( 8, 9 ) à ressort ont respectivement un ressort hélicoïdal.
